# DEMANDE DE BREVET EUROPEEN

(11) **EP 0 598 960 A1**
(43) Date de publication de la demande: **01.06.1994**
(21) Numéro de dépôt: 92440130.0
(22) Date de dépôt: 25.11.1992
(51) Int. Cl.: B32B 31/00, B31F 5/04

(54) **Dispositif permettant la fabrication en continu et à grande vitesse de feuilles de carton compact contrecollé**

(71) Demandeur: R.H.C. (S.A.), F-75008 Paris (FR)
(72) Inventeur: Huot, Raynald, F-27160 Les Baux de Breteuil (FR)

(57) **Abrégé**

Dispositif permettant la fabrication en continu et à grande vitesse de feuilles de carton compact contrecollé à partir de bobines, notamment de papier recyclé.

Il comporte d'une part N dérouleurs de papier (1, 2, 3, 4) disposés en ligne, le premier dérouleur (1) et le dernier dérouleur (4) étant chargés chacun de papier (10, 40) recouvert sur une face d'un film de matière plastique alimentaire ; d'autre part (N-1) presses à rouleaux (22, 60, 70) chacune précédée d'un poste d'encollage (21, 11, 62) et suivie d'un redresseur (50, 61, 71), toutes les presses sauf les deux dernières (60, 70) étant suivies d'un séchoir (51), lesdites deux dernières presses (60, 70) servant à assembler au complexe (5) issu des presses précédentes (22), successivement le papier (10) issu du premier dérouleur (1) puis le papier (40) issu du dernier dérouleur (4), ou inversement le papier (40) issu du dernier dérouleur (4) puis le papier (10) issu du premier dérouleur (1).

## Description

La présente invention a pour objet un dispositif permettant la fabrication en continu et à grande vitesse de feuilles au format en carton compact contrecollé à partir de bobines, notamment de papier recyclé, en vue d'une utilisation dans le domaine de l'emballage alimentaire pour fruits et légumes.

La législation actuelle interdit l'utilisation de papier recyclé pour la réalisation d'emballages alimentaires, à moins que ledit papier recyclé en contact avec le contenu alimentaire ne soit recouvert d'un film de matière plastique dite alimentaire.

De plus il n'est pas possible, au moyen des dispositifs existants, de réaliser un complexe de carton compact contrecollé recouvert d'un matériau dit alimentaire à très grande vitesse.

La présente invention a pour but de proposer un dispositif permettant de réaliser à grande vitesse et en continu, à partir de plusieurs bobines de papier, recyclé ou non, un complexe de carton compact rainuré et découpé au format, puis empilé, permettant la fabrication d'emballages, notamment alimentaires.

Le dispositif objet de la présente invention est notamment destiné à la réalisation, en continu et à grande vitesse, d'une feuille de carton au format, recyclable, par assemblage et collage de plusieurs, soit N, feuilles de papier de type kraft, recyclé ou non, les deux feuilles de papier extérieures étant recouvertes extérieurement, par un procédé connu en soi, d'une couche d'une matière plastique dite alimentaire, par exemple du polyéthylène.

Un dispositif selon l'invention comporte à cet effet N dérouleurs disposés en ligne, le premier et le dernier étant chargés de papier de type kraft, recyclé ou non, recouvert d'un film de matière plastique alimentaire, tandis que les dérouleurs intermédiaires sont chargés de papier de type kraft, recyclé ou non.

Conformément à l'invention, le papier du premier dérouleur est enroulé sur celui-ci de manière que le film de matière plastique alimentaire soit à l'extérieur, et le papier du dernier dérouleur est enroulé de manière que le film de matière plastique alimentaire soit à l'intérieur.

Toujours conformément à l'invention, la feuille de papier du deuxième dérouleur est guidée jusqu'à un premier poste d'encollage où est déposé sur sa face inférieure un film régulier de colle, puis est amenée jusqu'à une presse ou elle est mise en contact avec la feuille de papier du troisième dérouleur.

Les feuilles collées et pressées sont ensuite dirigées vers un redresseur à rouleaux en vue d'éliminer toutes les déformations dues au cheminement des feuilles, puis dans un séchoir permettant l'assèchement de la colle.

L'ensemble ainsi collé est alors dirigé vers une deuxième presse où il est assemblé à une troisième feuille préalablement encollée, l'ensemble passant ensuite dans un redresseur à rouleaux puis dans un séchoir, et ainsi de suite.

A la (N-2)^{ième} presse l'ensemble collé est assemblé par sa face supérieure à la face inférieure de la feuille de papier issue du premier dérouleur sur laquelle a été préalablement déposé un film de colle dans le (N-2)^{ième} poste d'encollage, et au sortir de ladite (N-2)^{ième} presse les (N-1) feuilles collées passent dans le (N-2)^{ième} redresseur a rouleaux identique aux précédents.

L'ensemble des (N-1) feuilles collées est ensuite dirigé vers la (N-1)^{ième} presse pour être appliqué par sa face inférieure à la face supérieure, encollée dans le (N-1)^{ième} poste d'encollage, de la feuille de papier issue du N^{ième} dérouleur, puis les N feuilles assemblées passent dans le (N-1)^{ième} redresseur à rouleaux puis dans une double presse destinée à parfaire le collage.

Une fois l'assemblage réalisé la feuille de carton passe dans un scanner permettant de vérifier le grammage et l'humidité des feuilles, puis elle est rainurée et rectifiée par coupage dans le sens de la longueur et coupée aux dimensions voulues au format, sur un ou plusieurs niveaux selon le format, et empilée.

Quel que soit le nombre de feuilles assemblées pour réaliser un complexe contrecollé, les différents postes d'assemblage sont identiques à l'exception des deux derniers, qui servent à l'assemblage des feuilles extérieures, et qui ne comportent pas de séchoir.

Il est à noter que les deux derniers postes d'assemblage peuvent être inversés, c'est-à-dire que le papier du dernier dérouleur peut être assemblé à l'ensemble collé issu des postes précédents, avant assemblage au papier du premier dérouleur.

D'autre part l'ensemble des dérouleurs, des postes d'encollage, des redresseurs et des presses sont entraînés, de manière connue en soi, par des moteurs à vitesse variable synchronisés et reliés à un organe de commande électronique.

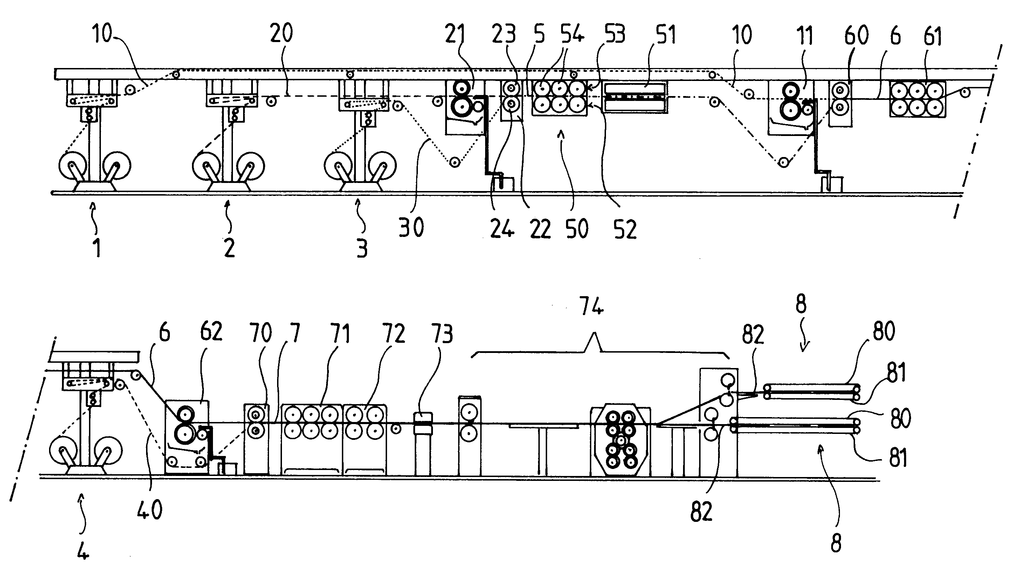

Les avantages et les caractéristiques de la présente invention ressortiront plus clairement de la description qui suit et qui se rapporte au dessin annexé, lequel en représente un mode de réalisation non limitatif.

La figure unique du dessin annexé représente une vue en élévation de profil du dispositif de fabrication en continu d'un complexe de carton compact contrecollé à usage alimentaire à base de papier recyclé ou non, selon l'invention, ledit complexe étant dans ce cas particulier réalisé par assemblage de quatre feuilles de papier.

Sur cette figure on peut voir qu'un dispositif selon l'invention comporte sur une même ligne quatre dérouleurs 1, 2, 3 et 4, les dérouleurs 1 et 4 étant chargés de papier recyclé recouvert sur une face, à savoir la face extérieure pour le papier 10 du dérouleur 1, et la face intérieure pour le papier 40 du dérouleur 4, d'un film de polyéthylène alimentaire, et les dérouleurs 2 et 3 étant chargés de papier recyclé, respectivement 20 et 30.

La feuille de papier 20 du dérouleur 2 est acheminée jusqu'à un poste d'encollage 21 à rouleaux où un film de colle est déposé sur sa face inférieure, puis elle est dirigée vers une presse 22, essentiellement constituée de deux rouleaux 23 et 24, où elle est mise en contact avec la feuille de papier 30, cet ensemble collé 5 étant ensuite introduit dans un redresseur 50, puis dans un séchoir 51.

Le redresseur 50 comporte deux séries 52 et 53 de trois rouleaux 54, disposés en regard de part et d'autre du plan dans lequel passe l'ensemble collé 5, montés sur coussinets, l'écartement entre deux rouleaux 54 en regard étant réglable.

La feuille de papier 5, issue du collage des feuilles de papier 20 et 30, est ensuite dirigée vers une presse 60 où elle est assemblée à la feuille de papier 10 dont la face inférieure a été préalablement encollée dans un poste d'encollage à rouleaux 11, puis la feuille de papier 6 ainsi réalisée est introduite dans un redresseur 61 analogue au redresseur 50.

La feuille de papier 6 est alors dirigée vers un poste d'encollage à rouleaux 62, où sa face inférieure est encollée, puis est amenée à une presse 70, où elle est assemblée à la face supérieure de la feuille de papier 40.

La feuille de papier 7 ainsi réalisée, composée de l'assemblage des feuilles de papier 10, 20, 30 et 40, recouverte sur ses deux faces d'un film de polyéthylène alimentaire, passe ensuite dans un redresseur 71, analogue aux redresseurs 50 et 61, puis dans une double presse 72.

Le contrôle de fabrication est assuré par un scanner 73 placé à la sortie de la double presse 72.

La ligne de fabrication débouche sur un poste 74 de découpe et de rainurage, les feuilles au format ainsi obtenues étant ensuite transférées vers des postes d'empilage, non représentés, par l'intermédiaire de transporteurs 8, essentiellement constitués chacun de deux bandes de transferts 80 et 81 parallèles et superposées, entre lesquelles passent les feuilles de carton au format 82, et où celles-ci sont à nouveau pressées afin de parfaire la prise et le séchage de la colle.

A titre d'exemple, un dispositif selon la présente invention permet d'atteindre une cadence de production de l'ordre de 200 m/mn.

Il va de soi que la présente invention ne saurait être limitée à la description qui précède d'un de ses modes de réalisation, susceptible de subir un certain nombre de modifications sans pour autant sortir du cadre de l'invention.

## Revendications

1. Dispositif permettant la fabrication en continu et à grande vitesse de feuilles de carton compact contrecollé à partir de bobines, notamment de papier recyclé, caractérisé en ce qu'il comporte d'une part N dérouleurs de papier (1, 2, 3, 4) disposés en ligne, le premier dérouleur (1) et le dernier dérouleur (4) étant chargés chacun de papier (10, 40) recouvert sur une face d'un film de matière plastique alimentaire ; d'autre part (N-1) presses à rouleaux (22, 60, 70) chacune précédée d'un poste d'encollage (21, 11, 62) et suivie d'un redresseur (50, 61, 71), toutes les presses sauf les deux dernières (60, 70) étant suivies d'un séchoir (51), lesdites deux dernières presses (60, 70) servant à assembler au complexe (5) issu des presses précédentes (22), successivement le papier (10) issu du premier dérouleur (1) puis le papier (40) issu du dernier dérouleur (4), ou inversement le papier (40) issu du dernier dérouleur (4) puis le papier (10) issu du premier dérouleur (1).

2. Dispositif selon la revendication 1, caractérisé en ce qu'il comporte en outre, après la dernière presse (70), un redresseur (71) et une double presse (72) à la sortie de laquelle est disposé un scanner (73) assurant le contrôle de fabrication.

3. Dispositif selon la revendication 1 ou la revendication 2, caractérisé en ce qu'il comporte en outre un poste (74) de découpe et de rainurage, suivi d'au moins un transporteur (8) comprenant deux bandes transporteuses (80, 81) parallèles et superposées entre lesquelles passent et sont pressées les feuilles de carton au format (82).
